# EUROPEAN PATENT SPECIFICATION

(11) **EP 2 773 501 B1**
(45) Date of publication and mention of the grant of the patent: **15.06.2016**
(21) Application number: 12844677.0
(22) Date of filing: 31.10.2012
(51) Int. Cl.: A44C 21/00, B32B 7/08, B32B 15/01, B32B 37/10, B30B 15/30, B32B 3/02, B32B 3/08, B32B 3/26

(54) **COMPOSITE STRUCTURE, FOR INSTANCE A COIN**
VERBUNDSTRUKTUR, ZUM BEISPIEL EINE MÜNZE
STRUCTURE COMPOSITE, PAR EXEMPLE UNE PIÈCE DE MONNAIE

(30) Priority: 01.11.2011 US 201161554170 P
(43) Date of publication of application: 10.09.2014
(73) Proprietor: Monnaie Royale Canadienne/Royal Canadian Mint, Ottawa, Ontario K1A 0G8 (CA)
(72) Inventor: LI, Xianyao, Ottawa, Ontario K2J 0W8 (CA)
(74) Representative: Awapatent A/S
(86) International application number: PCT/CA2012/050773
(87) International publication number: WO 2013/063700

(56) References cited:
- EP-A1- 0 564 667
- EP-A1- 0 700 644
- BG-A- 109 647
- JP-A- H0 591 914
- JP-A- 2008 212 342
- US-A- 5 630 288
- US-A1- 2004 173 434

## Description

### FIELD

The present disclosure relates generally to composite structures, for instance metal coins or the like.

### BACKGROUND

Bi-metallic coins are commonly used as circulation coins in many countries. Many of such bi-metallic coins are made up of two differently colored metals, for instance an outer ring of a white nickel finish and an inner core of golden yellow bronze finish, or vice versa. Because a bi-color, bi-metallic coin is more complex to produce as compared to a mono-color, mono-metal coin, bi-metallic coins are usually used as higher denominations.

In order to manufacture bi-metallic coins, a locking mechanism may be used to lock the two pieces together. The following are examples of locking mechanisms:
1) A series of grooves parallel to the surface of the coin components are formed in the outer ring and ridges formed on the inner core. The two components are joined by force using a coining press (see for example U.S. Patent No. 5,094,922 by lelpo et al.).
2) A groove or a series of discontinuous grooves are formed in the periphery of the inner core, so that material from the outer ring will flow to partially fill the grooves upon joining by force during striking of the coins (see for example U.S. Patent No. 4,472,891 by lelpo and U.S. Patent No. 5,630,288 by Lasset et al.).
3) Ridges are formed in the periphery of the inner core so that the excess material on the ridges is forced to flow into the inner circumferential surface of the outer ring in order to join the two components together, (see for example U.S. Patent No. 6, 189, 197 by Kim).
4) The outer ring and inner core are of different thickness and hardness so that a lip or tongue is formed to cover the thinner pieces, for instance the inner core (see for example U.S. Patent No. 6,044,541 by Truong). No grooves or ridges are used. 5) EP 0700644 A1 describes a coin blank comprising an outer ring and an inner disc. The inner disc is a layered structure comprising two outer layers and a core layer connected with each other. The outer ring and the inner disc can be joined together and locked via a serpentine groove. 6) EP 0564667 A1 describes a two-piece coin blank comprising an inner disc and an outer ring. The outer ring comprises slanted recesses provided in an outer edge thereof, the recesses pair-wise being oriented in opposite directions to one another. In one embodiment the recesses may be joined to form a waved groove.

Bulgarian Patent Document No. BG 109647 by Bogdanov describes a three-colored, three metal coin. It appears that these coins are intended to be collector coins as opposed to circulation coins. While collector coins are usually well protected, circulation coins must be able to withstand much greater use. BG 109647 does not appear to describe a locking mechanism sufficient for use in circulation coins.

### SUMMARY

Generally, the present disclosure relates to a composite structure having at least three different components, and a process for manufacturing the same. The structure may be, but need not be, a metal coin. In one embodiment, the structure comprises an outer ring and two inserts stacked on top of each other and disposed within the outer ring. The outer ring and each of the two inserts are made of different materials. The outer ring and each of the inserts are locked together by a plurality of recesses formed in outer circumferential surfaces of the inserts. The structure may further comprise at least one interlayer disposed between the two inserts for adhering the two inserts to one another. The three major components and the interlayer may be made into a single structure by a striking force during coining or striking. In one embodiment, the outer ring, the one inner core, and the other inner core are made of different metals and are different colors. The coin may have increased security features and may be produced in an automated manner.

In a first aspect, the present disclosure provides a composite structure comprising: an outer ring; and two inserts stacked on top of each other and disposed within the outer ring; wherein: the outer ring and each of the two inserts are made of different materials; the outer ring and each of the inserts are locked together by a plurality of recesses formed in outer circumferential surfaces of the inserts.

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present disclosure will now be described, by way of example only, with reference to the attached Figures.
Fig. 1 is a schematic cross-sectional view of a coin, together with two inserts in perspective view, according to a disclosed embodiment.
Fig. 2 is a schematic cross-sectional view of a coin, according to a disclosed embodiment.
Fig. 3a is a schematic of an insert having chevron shaped recesses, according to a disclosed embodiment.
Fig. 3b is a schematic of an insert having angle recesses, according to a disclosed embodiment. [0017] Fig. 4 is a schematic showing the feeding and placing of the three main components, according to a disclosed embodiment.
Fig. 5 is a schematic illustrating how the structure provides a particular EMS (electromagnetic signature), according to a disclosed embodiment.
Fig. 6 is a schematic illustrating how the structure provides a particular EMS (electromagnetic signature), according to a disclosed embodiment.

### DETAILED DESCRIPTION

The term "metal" as used herein includes metal alloys as well as plated metals and plated metal alloys.

While much of the discussion herein relates to coins and particularly metal coins, this is not intended to be limiting. Non-metal materials are expressly included, including, but not limited to, polymers, ceramics, and composites. Structures other than coins are also expressly included, for instance medals, medallions, and the like.

Generally, the present disclosure relates to a composite structure having at least three different components, and a process for manufacturing the same. The structure may be, but need not be, a metal coin. In one embodiment, the structure comprises an outer ring and two inserts stacked on top of each other and disposed within the outer ring. The outer ring and each of the two inserts are made of different materials. The outer ring and each of the inserts are locked together by a plurality of recesses formed in outer circumferential surfaces of the inserts. The structure may further comprise at least one interlayer disposed between the two inserts for adhering the two inserts to one another. The three major components and the interlayer may be made into a single structure by a striking force during coining or striking. In one embodiment, the outer ring, the one inner core, and the other inner core are made of different metals and are different colors. The coin may have increased security features and may be produced in an automated manner.

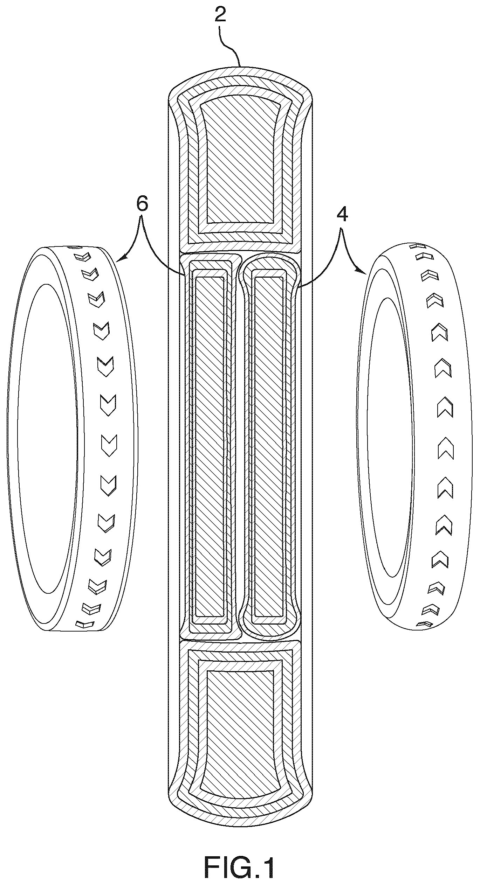

Fig. 1 illustrates one embodiment where the three major components are an outer ring (2) and two different inserts (4,6) of different compositions and colors which are sequentially placed into the middle of the outer ring (2). The three major components may be different metals. The two inserts (4,6) may be engineered in such a way that multi-ply platings are coated on metallic substrates and therefore unique interlayers of multiple metallic elements are formed in between the two inserts (4,6). The three major components may have different plated finishes, for instance the outer ring (2) being nickel, copper, nickel plated steel, and the first insert (4) being brass or bronze, copper, and nickel plated steel, and the second insert (6) being copper, nickel plated steel. As a result of coining from a so structured blank, the coin would have three colors or finishes, i.e. , a white ring, a red upper insert, and a yellow lower insert.

The three major components may be interchangeable in terms of material compositions from the above-mentioned examples. That is, a so structured coin may, for instance, have a yellow ring, a red upper insert, and white lower insert. This is merely one example of a multitude of combinations that a designer may choose.

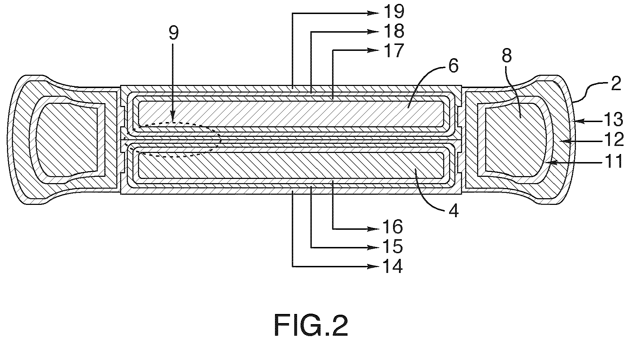

With reference to Fig. 2, the three major components may be designed and engineered as multi-ply plating structures, for instance the outer ring (2) being a steel core (8) with three layers of plating, such as Layer 1 (1 1), Layer 2 (12) and Layer 3 (13), and the two inserts (4,6) being two different metallic substrates, electroplated of different multiple-ply platings, such as Layer 4 (14) Layer 5 (15), Layer 6 (16), Layer 7 (17), Layer 8 (18) and Layer 9 (19), as schematically shown in Fig. 2. The sum of six layers in the interface (9) between the two plated inserts may have total thickness of up to 60 µη 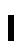 , or 20 to 60 µ 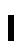 τ 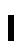 ), which is thick enough to contribute a unique security feature, i.e. a unique combination of electro magnetic signals (EMS) of the coin.

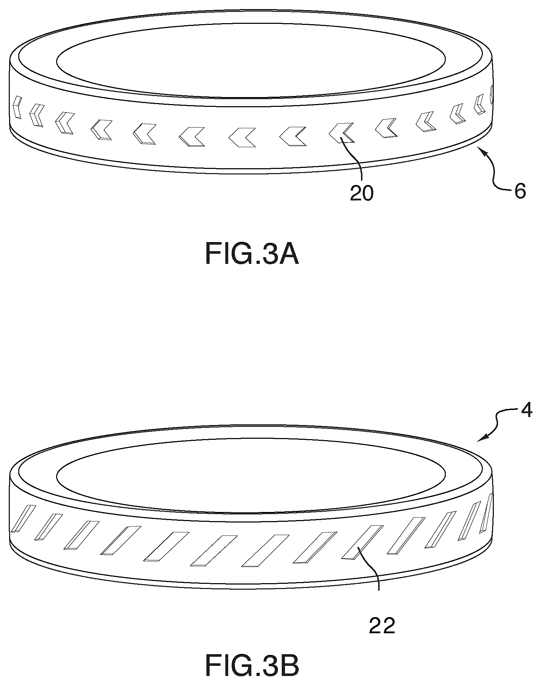

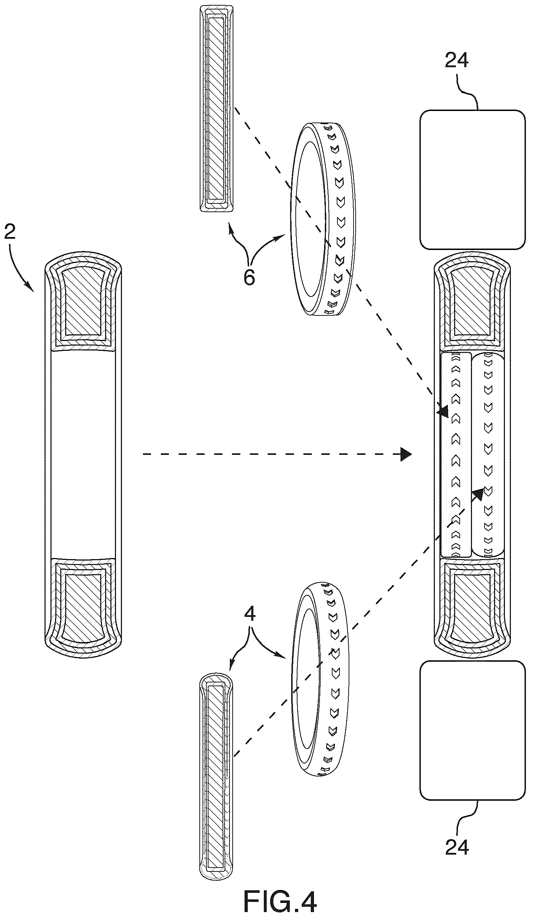

According to an embodiment, the following process may be used to produce such a coin:
1. Producing an outer ring of a material, either a metal or a metal alloy, or a plated material.
   a) If a metal or a metal alloy is used, the main steps may be:
      i. Preparing a cut blank;
      ii. Preparing the blank edge by a rimming process with a rimming segment of pre-determined rimming profile;
      iii. Preparing an inner hole or opening by a piercing process;
      iv. Annealing to achieve an appropriate hardness.
   b) If a plated material is used, the main steps may be:
      i. Preparing a cut blank;
      ii. Preparing the blank edge by a rimming process with a rimming segment of pre-determined rimming profile;
      iii. Preparing an inner hole or opening by a piercing process;
      iv. Deburing and cleaning; v. Effecting a plating process including annealing, cleaning, and barrel plating, as well as post annealing when needed.
2. Producing the first inner insert of a different material as compared to the outer ring, either different metal or metal alloy, or a plated material.
   a) If a metal or a metal alloy is used, the main steps may be:
      i. Preparing a cut blank;
      ii. Deburing or removing any burs from the blank cutting by a small force rimming or so-called "kiss rimming";
      iii. Preparing recesses (possibly equally spaced) along the outer periphery of the cut blank by using a specially made rimming segment on which, for instance, angled patterns, chevrons, or inclined humps, for instance of a width of between 0.5 to 1.0 mm and of a depth of about 0.2 mm (or 0.1 mm to 0.3mm), are used to produce the recesses. These so produced recesses are to lock the inserts and the outer ring together upon striking or coining. Figs. 3a and 3b illustrate the inserts (4,6) having chevron recesses (20) (Fig. 3a) and angled recesses (22)(Fig. 3b). The angles' recesses may be at angles of 30° to 45° from vertical (i.e. the direction of stacking, or perpendicular to the direction of contact between the inserts and the outer ring);
      iv. Annealing to achieve an appropriate hardness;
   b) If a plated material is used, the main steps may be:
      i. Preparing a cut blank;
      ii. Deburing and rimming to provide a slightly rimmed edge by a rimming process with a rimming segment of pre-determined rimming profile;
      iii. Softening for a proper hardness by an annealing process;
      iv. Plating in a barrel plating process including cleaning, surface preparation and plating, as well as post annealing when needed;
      v. Preparing recesses (possibly equally spaced) along the outer periphery of the plated blank by using a specially made rimming segment on which for instance, angled patterns, chevrons, or inclined humps, for instance of a width of between 0.5 to 1.0 mm and of a depth of about 0.2 mm (or 0.1 mm to 0.3mm), are used to produce the recesses. These so produced recesses are to lock the inserts and the outer ring together upon striking or coining.
   c) In another embodiment, where a plated material is used, the main steps may be:
      i. Preparing a cut blank;
      ii. Deburing and rimming to provide a slightly rimmed edge by a rimming process with a rimming segment of pre-determined rimming profile;
      iii. Softening for a proper hardness by an annealing process;
      iv. Preparing recesses (possibly equally spaced) along the outer periphery of the plated blank by using a specially made rimming segment on which for instance, angled patterns, chevrons, or inclined humps, for instance of a width of between 0.5 to 1.0 mm and of a depth of about 0.2 mm (or 0.1 mm to 0.3mm), are used to produce the recesses. These so produced recesses are to lock the inserts and the outer ring together upon striking or coining.
      v. Plating in a barrel plating process including cleaning, surface preparation, plating and post annealing.
3. Producing the second insert of a different material as compared to the outer ring and the first insert, either a different metal, or a plated material. This process is similar to Step 2 but with a different material, for instance a metal or a plated material.
4. As shown in Fig. 4, in a set-up of a coining press with a pair of coining dies and a coining collar (24), three separate blank feeding systems are used to sequentially feed and place the above three major components to the press. First, the ring (2) is placed, and then the first lower insert (4) is placed, followed by the second upper insert (6). These placements may be carried out in an automated system, such as in a Schuler high speed coining press.
5. Stamping or coining during which the three major components are joined together by plastic deformation and the locking mechanism upon the stamping or coining pressure.

The edge profiles of both inner inserts may have a slight chamfering made by a rimming process with a rimming segment of a predetermined rimming profile. The thickness of the ring is slightly thicker than the total thickness of the stacked two inserts, for example 0.1 to 0.2 mm thicker.

The recesses may be, for instance, in the shape of chevrons or angled dents. The recesses may be of a variety of shapes provided that they are not straight lines parallel to the circular axis of the coin since this would not provide adequate locking. The recesses may be equally spaced, or non-equally spaced around the circumference of the inserts. These recesses should be sufficient for the material from the outer ring to flow into so that the inserts and the outer ring become locked together.

By using recesses as described herein, locking can be achieved even when two thin inserts are used, without creating unacceptable dimension changes.

In a situation where the ring material is slightly softer than the insert materials, one may elect to manufacture a composite structure without the use of recesses. In this case, the thickness of the slightly softer outer ring material should be larger than the total thickness of the stacked inserts. Recesses could nonetheless be used in such a case to improve locking.

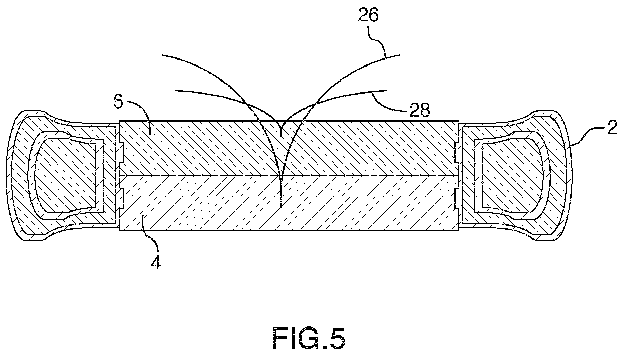

Fig. 5 illustrates one embodiment where the three major components are as follows:
1) The outer ring (2), being a multi-ply plated ring of mild steel as a substrate, a first nickel layer, a middle copper layer, and a top nickel layer.
2) The upper insert (6), a metal 1 or a metal alloy 1 , for instance, coinage copper, which is reddish in color.
3) The lower insert (4), a metal 2 or a metal alloy 2, which is a different composition and surface color, for instance aluminum bronze, which is golden yellow in color.

Such a composite coin will have three colors, namely, a white finish of the ring, a red finish on the upper surface, and a golden yellow on the lower surface. These three colors are visible thereby providing a security feature.

With regard to electromagnetic signatures, for instance for vending machine applications, such composite coins will have a distinguished EMS as sensed by high frequency and/or low frequency sensors due to the different materials on the upper and lower sides in the center of the coin. In Fig. 5, the low frequency (26) and high frequency (28) regions are shown. Furthermore, with a consideration of the multi-ply plated outer ring and using a modern vending machine whereby both the center area and the outer area are close to the coin edge, in this particular case, the ring area, are separately detected, this composite coin will provide multiple unique EMS parameters. Although the majority of coin vending machines or coin validators are currently designed and set up to accept the currently available bi-metallic coins, it is feasible technically to come up with a future coin validator or vending machine to evaluate and validate the tri- metallic coins as described herein.

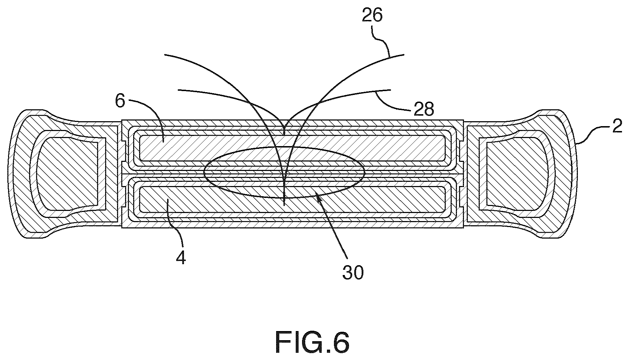

Fig. 6 illustrates one embodiment where the three major components are plated materials, for instance multi-ply materials, as follows:
1) The outer ring (2), being a multi-ply plated ring of mild steel as a substrate, a first nickel layer, a middle copper layer, and a top nickel layer.
2) The upper insert (6), being a multi-ply plated blank of mild steel as a substrate, a first nickel layer, and a top copper layer.
3) The lower insert (4), being a multi-ply plated blank of mild steel as a substrate, a first nickel layer, a middle copper layer, and a top brass or bronze layer.

As shown in Fig. 6, this composite coin has an internal layered structure (30) which is hidden and confined to the center core, in addition to its visual uniqueness of different colors similar to the embodiment of Fig. 5. This layered core may be between 40 to 60 µm, and would be detected by a modern vending sensor, as shown schematically in the shaded circle area. As a result, this composite coin provides a unique and distinguished EMS thus affording protection against counterfeiting. The low frequency (26) and high frequency (28) regions are also shown.

The inserts may also be produced by other means, for example, punched out from a metal strip which is produced by cladding different metals of two layers or multi-ply layers in a cold rolling process.

In another embodiment, the outer ring and the inner inserts are interchangeable in terms of materials, such as an outer ring of brass and bronze alloys or brass and bronze plated or multi-ply plated, and the inner inserts of mono-ply or multi-ply nickel plated and mono-ply or multi-ply- copper plated, or vice versa. In another embodiment, the outer ring material and the inner insert materials can also be interchangeable between plated materials and metals.

The inserts and/or the ring may be circular or non-circular (for instance, multi-sided, in the shape of a scallop, or in the shape of a Rosetta flower). While circular may be the simplest to produce, myriad shapes could be used. In one embodiment, the coining is done by an automatic presses, mechanically or hydraulically. The coining may also be done by manual operation in a press.

In the preceding description, for purposes of explanation, numerous details are set forth in order to provide a thorough understanding of the embodiments. However, it will be apparent to one skilled in the art that these specific details are not required.

The above-described embodiments are intended to be examples only. Alterations, modifications and variations can be effected to the particular embodiments by those of skill in the art without departing from the scope, which is defined solely by the claims appended hereto.

## Claims

1. A circulation coin comprising:
a. an outer ring (2);
b. two inserts (4, 6) stacked on top of each other and disposed within the outer ring (2);
wherein:
the outer ring (2) and each of the two inserts (4, 6) are made of different materials;
the outer ring (2) and the two inserts (4, 6) are made of multi-ply plated materials;
each insert (4, 6) has a surface comprising two opposing faces and an outer circumferential surface;
**characterized in that** at least one interlayer is disposed between the two inserts (4,6) for adhering the two inserts (4,6) to one another, and **in that** the outer ring (2) and each of the inserts (4, 6) are locked together by a plurality of recesses (20) formed in the outer circumferential surface of each of the inserts; wherein
each recess (20) has a shape of a chevron, or a non-equilateral, non-rectangular parallelogram, angled with respect to a direction of stacking the inserts, on the outer circumferential surface;
the shapes of the recesses (20) all have the same orientation.

2. The circulation coin of claim 1, wherein the recesses (20) have a depth of 0.1mm to 0.3mm.

3. The circulation coin of any one of claims 1 to 2, wherein the inserts (4, 6) are circular.

4. The circulation coin of any one of claims 1 to 2, wherein the inserts (4, 6) are non-circular.

5. The circulation coin of any one of claims 1 to 3, wherein the outer ring (2) is circular.

6. The circulation coin of any one of claims 1 to 2 and 4, wherein the outer ring (2) is non-circular.

7. The circulation coin of any one of claims 1 to 6, wherein the outer ring (2) and the two inserts (4, 6) are made of metal.

8. A process for manufacturing a circulation coin comprising:
providing an outer ring (2);
providing a first circular insert (4) and a second circular insert (6), each of the inserts (4, 6) and the outer ring (2) being of different materials and being made of multi-ply plated material, and each insert (4, 6) having a surface comprising two opposing faces and an outer circumferential surface;
**characterized by** forming a plurality of recesses (20) in the outer circumferential surface of each of the inserts (4, 6), each recess (20) having a shape of a chevron, or a non-equilateral, non-rectangular parallelogram, angled with respect to a direction of stacking of the inserts (4, 6), on the outer circumferential surface, wherein the shapes of the recesses (20) all have the same orientation;
sequentially feeding into a coining press, the outer ring (2), the first insert (4), and the second insert (6); and
stamping or coining to join together the outer ring (2), the first insert (4), and the second insert (6).

9. The process of claim 8, further comprising forming the outer ring (2) by:
preparing a cut metal blank;
rimming the blank;
forming an inner hole in the blank to form a ring;
annealing the ring to form an outer metal ring; and
plating the outer metal ring.

10. The process of claim 8 or 9, further comprising forming the inserts (4, 6) by:
preparing a cut blank;
deburring the blank; and
plating.

11. The process of any one of claims 8 to 10, wherein the circulation coin is the circulation coin according to any one of claims 1 to 7.

## Patentansprüche

1. Für den Umlauf bestimmte Münze, umfassend:
a. einen äußeren Ring (2);
b. zwei Einsätze (4, 6), die aufeinander gestapelt und im Inneren des äußeren Rings (2) angeordnet sind;
wobei:
der äußere Ring (2) und jeder der zwei Einsätze (4, 6) aus unterschiedlichen Materialien hergestellt sind;
der äußere Ring (2) und die zwei Einsätze (4, 6) aus mehrlagigen plattierten Materialien hergestellt sind;
jeder Einsatz (4, 6) eine Oberfläche aufweist, die zwei gegenüberliegende Flächen und eine äußere Umfangsoberfläche umfasst;
**dadurch gekennzeichnet, dass** mindestens eine Zwischenschicht zwischen den zwei Einsätzen (4, 6) zum Kleben der zwei Einsätze (4, 6) aneinander angeordnet ist, und dadurch, dass der äußere Ring (2) und jeder der Einsätze (4, 6) durch mehrere Aussparungen (20), die in der äußeren Umfangsoberfläche jedes der Einsätze ausgebildet sind, miteinander verriegelt sind; wobei jede Aussparung (20) eine Form eines Sparrens oder eines nicht gleichseitigen, nicht rechteckigen Parallelogramms, das in Bezug auf eine Stapelrichtung der Einsätze abgewinkelt ist, auf der äußeren Oberfläche aufweist;
die Formen der Aussparungen (20) alle die gleiche Ausrichtung haben.

2. Für den Umlauf bestimmte Münze nach Anspruch 1, wobei die Aussparungen (20) eine Tiefe von 0,1 mm bis 0,3 mm aufweisen.

3. Für den Umlauf bestimmte Münze nach einem der Ansprüche 1 bis 2, wobei die Einsätze (4, 6) kreisförmig sind.

4. Für den Umlauf bestimmte Münze nach einem der Ansprüche 1 bis 2, wobei die Einsätze (4, 6) nicht kreisförmig sind.

5. Für den Umlauf bestimmte Münze nach einem der Ansprüche 1 bis 3, wobei der äußere Ring (2) kreisförmig ist.

6. Für den Umlauf bestimmte Münze nach einem der Ansprüche 1 bis 2 und 4, wobei der äußere Ring (2) nicht kreisförmig ist.

7. Für den Umlauf bestimmte Münze nach einem der Ansprüche 1 bis 6, wobei der äußere Ring (2) und die zwei Einsätze (4, 6) aus Metall hergestellt sind.

8. Verfahren zum Herstellen einer für den Umlauf bestimmten Münze, umfassend:
Bereitstellen eines äußeren Rings (2);
Bereitstellen eines ersten kreisförmigen Einsatzes (4) und eines zweiten kreisförmigen Einsatzes (6), wobei jeder der Einsätze (4, 6) und der äußere Ring (2) aus unterschiedlichen Materialien sind und aus einem mehrlagigen plattierten Material hergestellt sind und jeder Einsatz (4, 6) eine Oberfläche aufweist, die zwei gegenüberliegende Flächen und eine äußere Umfangsoberfläche umfasst;
**gekennzeichnet durch** das Bilden mehrerer Aussparungen (20) in der äußeren Umfangsoberfläche jedes der Einsätze (4, 6), wobei jede Aussparung (20) eine Form eines Sparrens oder eines nicht gleichseitigen, nicht rechteckigen Parallelogramms aufweist, das in Bezug auf eine Stapelrichtung der Einsätze (4, 6) abgewinkelt ist, auf der äußeren Oberfläche, wobei die Formen der Aussparungen (20) alle die gleiche Ausrichtung aufweisen;
sequenzielles Zuführen des äußeren Rings (2), des ersten Einsatzes (4) und des zweiten Einsatzes (6) in eine Münzprägepresse; und
Stanzen oder Prägen, um den äußeren Ring (2), den ersten Einsatz (4) und den zweiten Einsatz (6) miteinander zu verbinden.

9. Verfahren nach Anspruch 8, ferner umfassend das Bilden des äußeren Rings (2) durch:
Herstellen eines geschnittenen Metallrohlings;
Randstauchen des Rohlings;
Bilden eines inneren Lochs in dem Rohling, um einen Ring zu bilden:
Glühen des Rings, um einen äußeren Metallring zu bilden; und
Plattieren des äußeren Metallrings.

10. Verfahren nach Anspruch 8 oder 9, ferner umfassend das Bilden der Einsätze (4, 6) durch:
Herstellen eines geschnittenen Rohlings;
Entgraten des Rohlings; und
Plattieren.

11. Verfahren nach einem der Ansprüche 8 bis 10, wobei die für den Umlauf bestimmte Münze die für den Umlauf bestimmte Münze nach einem der Ansprüche 1 bis 7 ist.

## Revendications

1. Pièce de monnaie à mettre en circulation, comprenant:
a. un anneau extérieur (2);
b. deux inserts (4, 6) superposés l'un au-dessus de l'autre et disposés à l'intérieur de l'anneau extérieur (2);
dans laquelle:
l'anneau extérieur (2) et chacun des deux inserts (4, 6) sont constitués de matériaux différents;
l'anneau extérieur (2) et les deux inserts (4, 6) sont constitués de matériaux plaqués à couches multiples;
chaque insert (4, 6) présente une surface comprenant deux faces opposées et une surface circonférentielle extérieure,
**caractérisée en ce qu'**au moins une couche intermédiaire est disposée entre les deux inserts (4, 6) afin de faire adhérer les deux inserts (4, 6) l'un à l'autre, et **en ce que**
l'anneau extérieur (2) et chacun des inserts (4, 6) sont verrouillés les uns aux autres par une pluralité d'évidements (20) formés dans la surface circonférentielle extérieure de chacun des inserts,
dans laquelle chaque évidement (20) a la forme d'un chevron, ou d'un parallélogramme non équilatéral non rectangulaire, incliné par rapport à une direction de superposition des inserts, sur la surface circonférentielle extérieure; et
les formes des évidements (20) présentent toutes la même orientation.

2. Pièce de monnaie à mettre en circulation selon la revendication 1, dans laquelle les évidements (20) présentent une profondeur de 0,1 mm à 0,3 mm.

3. Pièce de monnaie à mettre en circulation selon l'une quelconque des revendications 1 à 2, dans laquelle les inserts (4, 6) sont circulaires.

4. Pièce de monnaie à mettre en circulation selon l'une quelconque des revendications 1 à 2, dans laquelle les inserts (4, 6) sont non circulaires.

5. Pièce de monnaie à mettre en circulation selon l'une quelconque des revendications 1 à 3, dans laquelle l'anneau extérieur (2) est circulaire.

6. Pièce de monnaie à mettre en circulation selon l'une quelconque des revendications 1 à 2 et 4, dans laquelle l'anneau extérieur (2) est non circulaire.

7. Pièce de monnaie à mettre en circulation selon l'une quelconque des revendications 1 à 6, dans laquelle l'anneau extérieur (2) et les deux inserts (4, 6) sont constitués de métal.

8. Procédé de fabrication d'une pièce de monnaie à mettre en circulation comprenant les étapes suivantes:
- fournir un anneau extérieur (2);
- fournir un premier insert circulaire (4) et un deuxième insert circulaire (6), chacun des inserts (4, 6) et l'anneau extérieur (2) étant constitués de matériaux différents et étant constitués d'un matériau plaqué à couches multiples et chaque insert (4, 6) présentant une surface comprenant deux faces opposées et une surface circonférentielle extérieure, **caractérisé par** la formation d'une pluralité d'évidements (20) dans la surface circonférentielle extérieure de chacun des inserts (4, 6), chaque évidement (20) ayant la forme d'un chevron, ou d'un parallélogramme non équilatéral non rectangulaire, incliné par rapport à une direction de superposition des inserts (4, 6) sur la surface circonférentielle extérieure, dans lequel les formes des évidements (20) présentent toutes la même orientation;
introduire de façon séquentielle dans une presse de frappe de pièces de monnaie l'anneau extérieur (2), le premier insert (4) et le deuxième insert (6); et
exécuter un estampage ou une frappe afin de joindre l'anneau extérieur (2), le premier insert (4) et le deuxième insert (6) les uns aux autres.

9. Procédé selon la revendication 8, comprenant en outre la formation de l'anneau extérieur (2) par:
- la préparation d'un flan métallique coupé;
- le cerclage du flan;
- la formation d'un trou intérieur dans le flan de manière à former un anneau;
- le recuit de l'anneau pour former un anneau métallique extérieur; et
- le placage de l'anneau métallique extérieur.

10. Procédé selon la revendication 8 ou 9, comprenant en outre la formation des inserts (4, 6) par:
- la préparation un flan coupé;
- l'ébavurage du flan; et
- un placage.

11. Procédé selon l'une quelconque des revendications 8 à 10, dans lequel la pièce de monnaie à mettre en circulation est la pièce de monnaie à mettre en circulation selon l'une quelconque des revendications 1 à 7.
